# EUROPÄISCHE PATENTSCHRIFT

(11) **EP 2 941 823 B1**
(45) Veröffentlichungstag und Bekanntmachung des Hinweises auf die Patenterteilung: **21.10.2020**
(21) Anmeldenummer: 13708752.4
(22) Anmeldetag: 28.02.2013
(51) Int. Cl.: H02M 7/00, H02J 3/36, H02J 3/38

(54) **UMRICHTERSTATION MIT DIODENGLEICHRICHTER**
CONVERTER STATION WITH DIODE RECTIFIER
POSTE DE CONVERSION ÉQUIPÉ D'UN REDRESSEUR À DIODES

(43) Veröffentlichungstag der Anmeldung: 11.11.2015
(73) Patentinhaber: Siemens Aktiengesellschaft, 80333 München (DE)
(72) Erfinder: DORN, Jörg, 96155 Buttenheim (DE); ERGIN, Dominik, 91083 Baiersdorf (DE); HAMMER, Thomas, 91126 Schwabach (DE); KNAAK, Hans-Joachim, 91054 Erlangen (DE); MENKE, Peter, 96237 Oberfüllbach (DE); SCHUSTER, Roland, 91056 Erlangen (DE); MOELLER, Jesper, DK-6700 Esbjerg (DK); STIESDAL, Henrik, DK-5000 Odense C (DK); THISTED, Jan, DK-8830 Tjele (DK)
(86) Internationale Anmeldenummer: PCT/EP2013/054070
(87) Internationale Veröffentlichungsnummer: WO 2014/131457

(56) Entgegenhaltungen:
- EP-A1- 2 341 594
- WO-A2-2011/033308
- MINYUAN GUAN ET AL: "A novel concept of offshore wind-power collection and transmission system based on cascaded converter topology", INTERNATIONAL TRANSACTIONS ON ELECTRICAL ENERGY SYSTEMS, 18. Oktober 2012 (2012-10-18), Seiten n/a-n/a, XP055081003, ISSN: 2050-7038, DOI: 10.1002/etep.1701
- GOMIS-BELLMUNT O ET AL: "Topologies of multiterminal HVDC-VSC transmission for large offshore wind farms", ELECTRIC POWER SYSTEMS RESEARCH, ELSEVIER, AMSTERDAM, NL, Bd. 81, Nr. 2, 1. Februar 2011 (2011-02-01), Seiten 271-281, XP027572772, ISSN: 0378-7796 [gefunden am 2010-10-27]
- Haseeb Ahmad: "Offshore Wind Park Connection to an HVDC Platform, without using an AC Collector Platform", , 30 June 2012 (2012-06-30), pages 1-108, XP055353114, Retrieved from the Internet: URL:https://uu.diva-portal.org/smash/get/d iva2:617719/FULLTEXT01.pdf [retrieved on 2017-03-09]

## Beschreibung

Die Erfindung betrifft eine Umrichterstation zum Übertragen elektrischer Leistung mit einem Umrichter, der einen Gleichspannungsanschluss und einen Wechselspannungsanschluss aufweist, und wenigstens einem Transformator, der mit dem Wechselspannungsanschluss verbundenen ist.

Eine solche Umrichterstation ist beispielsweise aus dem Artikel von S. Bernal-Perez et al., "Windpower plant control for the connection to multiterminal HVDC links", IEEE, 2012, Seite 2873 bekannt. Dort ist eine Anlage offenbart, bei der ein Diodengleichrichter gleichspannungsseitig mit einem Gleichspannungszwischenkreis verbunden ist. Der Gleichspannungszwischenkreis erstreckt sich zwischen zwei spannungseinprägenden Umrichtern, die im Englischen auch als "Voltage Source Converter (VSC)" bezeichnet werden. Der Diodengleichrichter ist über Transformatoren und einem Wechselspannungsnetz mit einem Windpark verbunden. Darüber hinaus sind Filtereinheiten offenbart, die wechselspannungsseitig des Umrichters angeordnet sind. Gleichspannungsseitig dient eine Glättungsdrossel zum Glätten des vom Diodengleichrichter erzeugten Gleichstromes.

Die Anbindung von im Meer aufgestellten Windparks an ein landseitiges Versorgungsnetz erfolgt bei großen Übertragungsstrecken in der Regel mittels Gleichstrom. Aus diesem Grunde wird in der Praxis derzeit ein Umrichter auf einer Hochseeplattform untergebracht, die in der Nähe des Windparks im Meer aufgestellt wird. Dieser seeseitige Umrichter ist über ein Wechselspannungsnetz mit dem Windpark verbunden, wobei sich eine Gleichspannungsverbindung von seinem Gleichspannungsanschluss zu einem landseitigen Umrichter erstreckt. Das Aufstellen solcher Umrichter im Meer ist jedoch aufgrund des immer noch hohen Gewichts und großen Volumens der Umrichter kostenintensiv.

Die EP 2 341 594 A1 offenbart eine Anlage zum Übertragen elektrischer Leistung zwischen einem Windpark und einem Versorgungsnetz mit einer Gleichspannungswandlerstation. Die Gleichspannungswandlerstation umfasst mehrere Gleichspannungswandler auf separaten Wandlerplattformen, die in Reihe angeordnet und mit einer Gleichspannungsleitung verbunden sind. Mittels der Gleichspannungsleitung wird die elektrische Leistung an das Versorgungsnetz übertragen. Jeder Gleichspannungswandler ist zudem mit einer Gleichspannungssammelleitung verbunden, an den Windkraftanlagen des Windparks angeschlossen sind. Die Windkraftanlagen weisen Umrichtereinheiten sowie primäre DCDC-Wandler zur Umwandlung von Wechselspannung in Gleichspannung und zur Einspeisung der Gleichspannung in die Gleichspannungssammelleitung.

Eine weitere Anlage zum Übertragung elektrischer Leistung zwischen einem Windpark und einem Versorgungsnetz ist aus dem Beitrag von Munyuan Guan et al., "A novel concept of offshore wind-power collection an transmission system based on cascaded converter topology" bekannt. Die dort beschriebene Anlage umfasst Windkraftanlagen, die jeweils einen Umrichter zur Umwandlung der in der Windkraftanlage erzeugten Wechselspannung in Gleichspannung umfassen. Die Windkraftanlagen sind miteinander in einer Reihenschaltung verbunden und an eine Hochspannungsgleichstromleitung angeschlossen. Mittels der Hochspannungsgleichstromleitung wird die elektrische Leistung an das Versorgungsnetz übertragen. Auf eine zentrale Umrichterstation kann dabei verzichtet werden.

Eine Umrichterstation gemäß dem Oberbegriff des Patentanspruchs 1 ist aus dem Beitrag "Offshore Wind Park Connection to an HVDC Platform without using an AC Collector Platform" von Haseeb Ahmad bekannt.

Aufgabe der Erfindung ist es daher, eine Umrichterstation der eingangs genannten Art bereitzustellen, die möglichst kostengünstig ist.

Diese Aufgabe wird im Rahmen der Erfindung durch eine Umrichterstation gemäß dem Patentanspruch 1 gelöst.

Die Erfindung ist durch den unabhängigen Anspruch definiert. Vorteilhafte Ausgestaltungen ergeben sich durch die abhängigen Ansprüche.

Erfindungsgemäß wird die Umrichterstation nicht mehr auf einer einzigen Tragstruktur angeordnet. Vielmehr wird das Gewicht der Umrichterstation auf verschiedene Tragstrukturen verteilt. Im Rahmen der Erfindung kann deshalb auf die heute üblichen, sehr aufwändigen Plattformen verzichtet werden und stattdessen Tragstrukturen eingesetzt werden, die beispielsweise auch zum Tragen von Windenergieanlagen verwendet werden. Die verteilte Anordnung der erfindungsgemäßen Umrichterstation auf vergleichsweise kostengünstigen Tragstrukturen wird insbesondere bei einem Umrichter vorteilhaft, der als Diodengleichrichter ausgestaltet ist. Der Diodengleichrichter weist im Vergleich zu den bislang zur Windparkanbindung eingesetzten selbstgeführten Umrichter ein deutlich geringeres Gewicht auf. Dies gilt eingeschränkt auch für einen Thyristor-Umrichter, der mit aus Thyristoren gebildeten Stromventilen bestückt ist.

Die erfindungsgemäße Umrichterstation kann beispielsweise einen Umrichter aufweisen, der von einer eigenen, also separaten, Tragstruktur gehalten ist. Weitere Bauteile sind von der besagten Tragstruktur nicht gehalten. Dabei bildet der Umrichter wenigstens eine Sechspuls-Brücke mit seinen Storm- oder Spannungsventilen aus. Eine der Gleichspannungsklemmen dieser Sechs-Puls-Brücke ist z.B. mit dem Erdpotenzial verbunden. Die andere Gleichspannungsklemme ist dann beispielsweise über eine einpolige Gleichspannungsverbindung an einen landseitigen Umrichter angeschlossen. Auch ist es möglich, den Umrichter als eine aus der Hochspannungsgleichstromübertragung bekannte 12-Puls-Brücke auszugestalten. Die 12-Puls-Brücke verfügt über zwei Sechs-Puls-Brücken, die gleichspannungsseitig in Reihe geschaltet sind. Ihr Verbindungspunkt liegt in der Regel auf Erdpotenzial. Jede Sechs-Puls-Brücke ist beispielsweise über einen separaten Transformator an ein Wechselspannungsnetz angeschlossen. Die Wicklungen der beiden Transformatoren sind unterschiedlich miteinander verbunden, so dass an den Transformatoren bei der Übertragung eine unterschiedliche Phasenverschiebung erfolgt. Selbstverständlich kann die Umrichterstation auch zwei Sechspuls-Brücken aufweisen, die jeweils mit einer Klemme auf Erdpotenzial liegen.

Die Ausgestaltung des Umrichters ist grundsätzlich im Rahmen der Erfindung beliebig. Der Umrichter ist beispielsweise ein selbstgeführter Umrichter, wie beispielsweise ein spannungseinprägender Umrichter oder Englisch "Voltage Source Converter (VSC)". Auch der Einsatz eines modularen Mehrstufenumrichters ist im Rahmen der Erfindung möglich. Selbstverständlich kann der Umrichter auch ein fremdgeführter Umrichter sein, dessen Stromrichterventile Thyristoren aufweisen.

Gemäß einer ersten Variante der Erfindung sind der Umrichter und wenigstens einer der Transformatoren von verschiedenen Tragstrukturen gehalten. Diese Aufteilung hat sich hinsichtlich der Gewichtsverteilung als besonders zweckmäßig erwiesen.

Gemäß einer bevorzugten Variante der Erfindung sind die Tragstrukturen im Meer oder in einer See anordenbar, wobei zumindest eine Tragstruktur eine Windenergieanlagen-Tragstruktur ist, die zum Halten einer Windenergieanlage dimensioniert ist. Mit anderen Worten werden gemäß dieser Variante der Erfindung Tragstrukturen eingesetzt, die auch zum Halten von Windenergieanlagen dienen oder dienen können. Sie sind hinsichtlich ihrer Dimensionierung, der eingesetzten Materialen und deren Materialstärken auf das Halten von Massen ausgelegt, die der Masse einer handelsüblichen Windenergieanlage entsprechen. Solche zum Halten von Windenergieanlagen übliche Tragstrukturen, also Windenergieanlagen-Tragstrukturen, sind dem Fachmann unter den Begriffen Monopile, Tripile, Tripod, Jacket, Schwerkraftfundament, schwimmende Tragstruktur oder dergleichen bekannt. Ausführungsbeispiele hierzu werden nachfolgend mit Bezug auf die Zeichnung gegeben. Windenergieanlagentragstrukturen sind in der Herstellung im Vergleich zu Hochseeplattformen günstig. Dabei ist es im Rahmen der Erfindung nicht ausgeschlossen, dass von der jeweiligen Tragstruktur auch andere Bauteile gehalten sind, die nicht Bauteile der Umrichterstation sind. Erfindungsgemäß können Teile der Umrichterstation somit auch an einer Tragstruktur angeordnet sein, die zusätzlich eine Windenergieanlage trägt oder hält. Im Rahmen der Erfindung können die Bauteile der Umrichterstation auch direkt an einen Turm des Traggerüsts der Windenergieanlage montiert sein.

Erfindungsgemäß weist der Umrichter mehrere gleichspannungsseitig in Reihe oder parallel geschaltete Teilumrichter auf. Mit Hilfe dieser Teilumrichter ist der Umrichter einfach skalierbar und kann somit leicht an die jeweils vorliegenden Strom- beziehungsweise Spannungserfordernisse angepasst werden. Dabei kann jeder Teilumrichter an einer separaten nur ihm allein zugeordneten Tragstruktur, beispielsweise einem "Mono-Pile", angeordnet sein. Selbstverständlich können auch mehrere Teilumrichter von einer Tragstruktur gehalten sein.

Gemäß der Erfindung ist jeder Teilumrichter wechselspannungsseitig mit einem Teiltransformator verbunden, wobei der besagte Teilumrichter und der besagte Teiltransformator in einem gemeinsamen Teilkapselungsgehäuse angeordnet sind. Gemäß dieser vorteilhaften Weiterentwicklung können Bauteile erzeugt werden, die sich beispielsweise einem Strang eines Windparks zugeordnet sind, wobei der Strang mit einer Anzahl von Windenergieanlagen verbunden ist. Das Kapselungsgehäuse kann auf einfache Art und Weise, beispielsweise auf der Tragstruktur einer Windenergieanlage, im Meer angeordnet sein. Zweckmäßigerweise weist jeder Teilumrichter zwei Gleichspannungsklemmen auf, die mittels eines Überbrückungsschalters überbrückbar sind. Gemäß dieser vorteilhaften Weiterentwicklung kann, beispielsweise im Fehlerfall, eine Teilumrichterstation, die beispielsweise einen Teilumrichter und einen Teiltransformator umfasst, überbrückt werden. Ist die Teilumrichterstation mit einem Abschnitt eines Windparks, beispielsweise mit einem Strang eines Windparks, verbunden, kann auf diese Weise auch der besagte Abschnitt überbrückt werden. Dies ist vorteilhaft, da der Fehler sowohl im jeweiligen Bauteil als auch in dem Strang oder Zweig des mit dem Bauteil verbundenen Wechselspannungsnetzes vorliegen kann.

Zweckmäßigerweise bildet jeder Teilumrichter eine 6-Puls-brücke oder 12-Pulsbrücke aus.

Zweckmäßigerweise ist wechselspannungsseitig des Umrichters eine Filtereinheit vorgesehen. Die Filtereinheit dient zur Blindleistungskompensation und zum Herausfiltern von harmonischen Oberschwingungen der Grundschwingung, die beim Normalbetrieb des Umrichters entstehen können. Die Filtereinheit kann auch Windenergieanlagen umfassen oder ausschließlich aus Windenergieanlagen bestehen.

Zweckmäßigerweise ist jeder Teilumrichter gleichspannungsseitig mit einer Teilglättungsdrossel verbunden. Die Teilglättungsdrossel dient zum Glätten des Gleichstroms. Dies ist insbesondere zweckmäßig, wenn die Teilumrichter zumindest teilweise als Teildiodengleichrichter ausgestaltet sind.

Gemäß der Erfindung sind die Teilumrichter zumindest teilweise Teildiodengleichrichter, deren Stromventile eine Reihenschaltung aus Dioden aufweisen. Insbesondere der Teildiodengleichrichter, der wieder eine 6- oder 12-Pulsbrücke ausbilden kann, ist im Vergleich zum selbstgeführten Teilumrichter leicht und verursacht wenig

Verluste. Ein Tyristor-Teilumrichter bildet Stromventile aus, die aktiv also durch einen Zündimpuls eingeschaltet, jedoch nicht abgeschaltet werden können. Thyristor-Stromventile sind jedoch robust und kostengünstig.

Vorteilhafterweise ist der Umrichter ein Diodengleichrichter. Wie bereits ausgeführt wurde ist der Diodengleichrichter mit seinen passiven Leistungshalbleitern, die nicht ansteuerbar sind, im Vergleich zu einem Umrichter mit ein- und abschaltbaren Umrichter leicht und verlustarm.

Ist der Umrichter ein Diodengleichrichter ist es zweckmäßig, dass der Diodengleichrichter gleichspannungsseitig mit einer Glättungsdrossel verbunden ist.

Zweckmäßigerweise sind Energieversorgungsmittel zur Versorgung eines an die Umrichterstation angeschlossenen Wechselspannungsnetzes vorgesehen. Die Energieversorgungsmittel werden dem Umstand gerecht, dass ein Diodengleichrichter eine Leistungsübertragung in nur einer Richtung erlaubt. Im Falle einer Windparkanbindung, wofür sich die erfindungsgemäße Umrichterstation insbesondere eignet, ist es jedoch oftmals erforderlich, das an die Umrichterstation angeschlossene Wechselspannungsnetz mit elektrischer Leistung zu versorgen. Mit Hilfe dieser elektrischen Energie können beispielsweise die Windenergieanlagen des Windparks ausgerichtet und die Rotorblätter um den jeweils erforderlichen Winkel verstellt werden. Die Energieversorgungsmittel umfassen beispielsweise ein Dieselmotor, der einen Generator antreibt, wobei der Generator die benötigte elektrische Leistung erzeugt, die in das mit dem Windpark verbundene Wechselspannungsnetz eingespeist wird.

Vorteilhafterweise sind die Energieversorgungsmittel jedoch so ausgestaltet, dass auf einen Dieselmotor verzichtet werden kann, da der Dieselmotor wartungsintensiv ist und ständig mit Diesel versorgt werden muss. Insbesondere bei einer meerseitigen Aufstellung der erfindungsgemäßen Umrichterstation ist die Kraftstoffversorgung bei Wind und Wetter beschwerlich. Aus diesem Grunde ist es im Rahmen der Erfindung zweckmäßig, Energieversorgungsmittel bereitzustellen, mit denen die Leistung von einem landseitigen Versorgungsnetz oder einem benachbarten meerseitigen Wechselspannungsnetz eingespeist werden kann. Solche Energieversorgungsmittel umfassen eine sich zumindest teilweise durch das Wasser erstreckende Energieversorgungsleitung, die z.B. eine Wechselspannungsleitung mit einer Spannung im Bereich von 50 bis 70 kV ist.

Gemäß einer hiervon abweichenden Ausgestaltung der Erfindung umfassen die Energieversorgungsmittel einen Teilumrichter, der Teildiodengleichrichtern des Umrichters gleichspannungsseitig in Reihe geschaltet ist. Mit Hilfe des Teilumrichters ist es möglich, die Gleichspannungsverbindung, durch welche die Umrichterstation mit dem landseitigen Energieversorgungsnetz verbunden ist, auch die für die Bereitstellung des Leistungsflusses in entgegengesetzter Richtung, also von Land zum Windpark, zu nutzen. Hierbei ist es selbstverständlich zweckmäßig, wenn die Teildiodengleichrichter, wie zuvor erwähnt, mit einem Überbrückungsschalter ausgestattet sind, mit denen die Überbrückung der Teildiodengleichrichter in der Reihenschaltung ermöglicht ist, so dass die Leistung von einem landseitigen Umrichter über die Gleichspannungsverbindung bereitgestellt und von dem oder den Teilumrichtern in Wechselspannung umgewandelt werden kann. Die so erzeugte Wechselspannung dient dann zur Energieversorgung eines angeschlossenen Windparks.

Zweckmäßigerweise ist der Transformator mit einer Schaltanlage verbunden. Die Schaltanlage ist beispielsweise eine gasisolierte Schaltanlage, wobei eine entsprechende Durchführung zwischen der Schaltanlage und dem beispielsweise in Öl gelagerten Transformator vorgesehen ist. Wie bereits weiter oben erwähnt wurde, sind im Rahmen der Erfindung auch mehrere Transformatoren einsetzbar. Dies gilt auch für die Schaltanlage.

Zweckmäßigerweise ist die Schaltanlage über eine Wechselspannungsleitung mit einem Einkoppelbauteil verbindbar, das an ein landseitiges Energieversorgungsnetz oder ein seeseitiges Wechselspannungsnetz angeschlossen ist.

Vorteilhafterweisen sind der Transformator und der Umrichter in einem Isolierstoff angeordnet. Der Begriff Isolierstoff soll im Rahmen der Erfindung alle Gase, Flüssigkeiten und Feststoffe umfassen, die gegenüber atmosphärischer Luft verbesserte Isolationseigenschaften aufweisen. Aufgrund der verbesserten Isolationseigenschaften können die einzelnen Komponenten des Umrichters, die auf einem unterschiedlich hohen elektrischen Potentialen liegen, mit weniger Abstand zueinander angeordnet werden, ohne dass es zu Spannungsüberschlägen kommt. Insbesondere ein oder Diodengleichrichter kann mit seinen passiven und nicht ansteuerbaren Leistungshalbleitern problemlos in einem Isolierstoff angeordnet werden. Dies gilt auch für einen mit Thyristoren ausgerüsteten fremdgeführten Umrichter Lediglich im Wartungsfall muss der Isolierstoff entfernt werden. Hierzu sind z.B. an einem Kapselungsgehäuse, in dem der Umrichter angeordnet ist, Einlass- und Auslassmittel vorgesehen, über die der Isolierstoff entweichen beziehungsweise eingefüllt werden kann.

Gemäß einer bevorzugten Ausgestaltung der Erfindung sind der Umrichter und der Transformator jeweils in einem Kapselungsgehäuse angeordnet, wobei die Kapselungsgehäuse miteinander verbunden sind. Auf diese Weise können die besagten Bauteile elektrisch miteinander verschaltet werden, ohne dass aufwändige Durchführungen eingesetzt werden müssen, die einen auf einem Hochspannugnspotential liegenden Leiter von der einen Isolierstoffumgebung in eine andere Isolierstoffumgebung oder in eine Luftatmosphäre überführen. Die in der Regel auf Erdpotenzial liegende Kapselung der Bauteile der Umrichterstation schützt diese darüber hinaus vor schädlichen Umwelteinflüssen, die insbesondere bei einer Aufstellung der Umrichterstation im Meer oder in einem See für Schäden sorgen können.

Erfindungsgemäß ist wenigstens ein Kapselungsgehäuse vorgesehen, in dem zumindest ein Teil des Umrichters und zumindest ein Teil des Transformators gemeinsamen angeordnet sind, wobei das Kapselungsgehäuse mit dem Isolierstoff befüllt ist. Gemäß der Erfindung ist ein mit Isolierstoff befülltes Kapselungsgehäuse vorgesehen, in dem der (Teil-)Umrichter und der (Teil-)Transformator gemeinsam angeordnet sind. Auf diese Art und Weise kann die Umrichterstation noch kompakter ausgestaltet werden. In dem oder den Kapselungsgehäusen sind selbstverständlich auch das Beschaltungsnetzwerk des Umrichters untergebracht. Das oder die Kapselungsgehäuse liegen zweckmäßigerweise auf Erdpotenzial.

Der Isolierstoff kann grundsätzlich gasförmig, flüssig oder auch ein Feststoff sein. Zweckmäßigerweise werden die in der Energieübertragung und -verteilung bekannten Schutzgase, wie Schwefelhexafluorid oder der gleichen, eingesetzt. Besondere Vorteile ergeben sich jedoch, wenn als Isolierstoff eine Flüssigkeit, wie beispielsweise ein zweckmäßiges Isolieröl eingesetzt wird. Das Öl stellt neben der Isolierung auch eine Kühlung bereit.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Umrichterstation,
- Figur 1a: den Diodengleichrichter im Detail,
- Figur 2: ein weiteres Ausführungsbeispiel einer erfindungsgemäßen Umrichterstation, die einen meerseitig angeordneten Windpark mit einem landseitigen Umrichter verbindet,
- Figur 3: ein Ausführungsbeispiel einer Teilumrichterstation mit Teildiodengleichrichter, Teilglättungsdrossel und Teiltransformator in einem gemeinsamen Kapselungsgehäuse,
- Figur 4: ein Ausführungsbeispiel eines Teilumrichters mit einem Teiltransformator,
- Figur 5: die Teilumrichterstation gemäß Figur 3 in einer Seitenansicht,
- Figur 6: eine Reihe von derzeit eingesetzten Windenergieanlagen-Tragstrukturen und
- Figur 7: eine Windenergieanlagen-Tragstruktur schematisch verdeutlichen, an der die Teilumrichterstation gemäß Figur 5 befestigt ist.

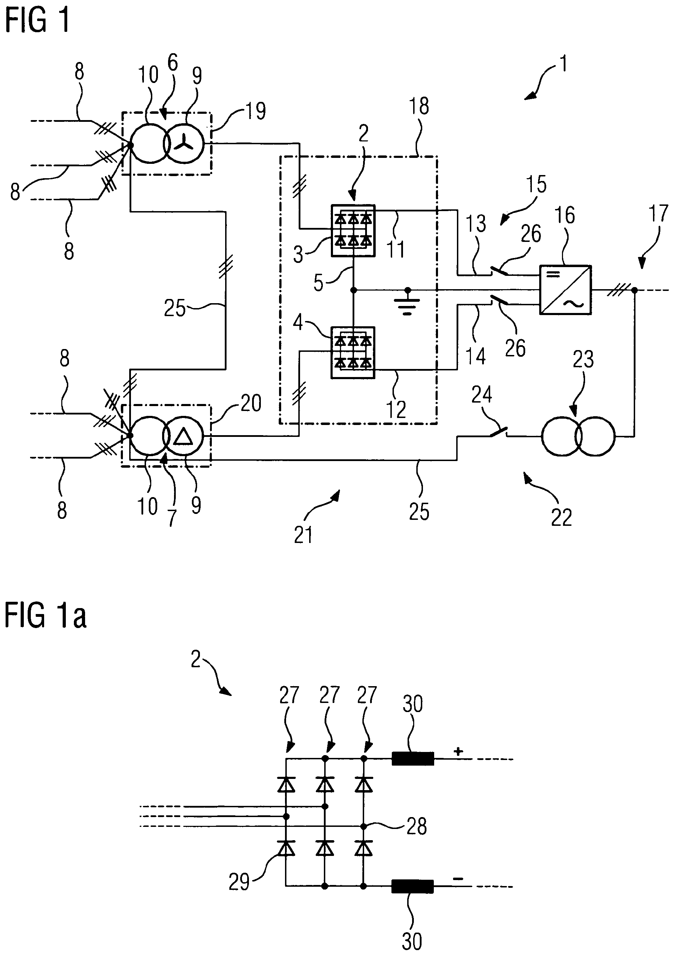

Figur 1 zeigt ein Ausführungsbeispiel der erfindungsgemäßen Umrichterstation 1, die einen Diodengleichrichter 2 umfasst. Der Diodengleichrichter 2 bildet eine so genannte 12-Puls-Brücke aus, die zwei Sechspuls-Brücken 3 und 4 umfasst, die an jeweils einer ihrer Gleichspannungsklemmen mittels einer geerdeten Verbindungsleitung 5 miteinander verbunden und jeweils über einen Transformator 6 beziehungsweise 7 mit unterschiedlichen Abschnitten oder Strängen 8 eines Wechselspannungsnetzes verbunden sind. Die Transformatoren 6, 7 weisen jeweils eine Primärwicklung 9 sowie eine Sekundärwicklung 10 auf. Die mit dem Wechselspannungsanschluss der 6-Puls-Brücke 3 galvanisch verbundene Primärwicklung 9 des ersten Transformators 6 bildet einen Sternpunkt aus. Die Primärwicklung 9 des zweiten Transformators 7 liegt hingegen als Dreiecksschaltung vor. Dies führt zu einem unterschiedlichen Phasenversatz bei den von ihnen übertragenen Wechselspannungen. Natürlich kann - im Rahmen der Erfindung - jede der beiden Sechspulsbrücken 3, 4 auch unabhängig von der anderen Sechspulsbrücke an einer ihrer Gleichspannungsklemmen geerdet sein. Auch wenn der Diodengleichrichter 2 nur eine Sechspuls-brücke aufweist, kann diese an einer Gleichspannungsklemme mit dem Erdpotential verbunden sein, so dass ein so genannter Monopol gebildet ist.

Bei dem in Figur 1 dargestellten Diodengleichrichter 2 weist jede der 6-Puls-Brücke 3 beziehungsweise 4 eine Gleichspannungsanschlussklemme 11 beziehungsweise 12 auf, die an jeweils einen Pol 13 beziehungsweise 14 einer Gleichspannungsverbindung 15 angeschlossen ist. In jedem Pol 13 beziehungsweise 14 ist eine figürlich nicht dargestellte Glättungsdrossel angeordnet. Durch die Gleichspannungsverbindung 15 ist der Diodengleichrichter 2 mit einem landseitigen und in Küstennähe aufgestellten Umrichter 16 verbunden, wobei der landseitige Umrichter 16 einen Wechselspannungsanschluss aufweist, mit dem dieser an ein landseitiges Energieversorgungsnetz 17 angeschlossen ist, das figürlich nur schematisch dargestellt ist. Das Energieversorgungsnetz 17 ist ein Wechselspannungsnetz.

Der Diodengleichrichter 2 ist auf einer Tragstruktur 18 angeordnet, die im Meer etwa 50 bis 400 km weit entfernt von der Küste angeordnet ist. In einer besonders vorteilhaften Ausführungsform werden als Tragstruktur 18 die beim jeweiligen Windpark eingesetzten Tragstrukturen und Fundamente verwendet oder die Komponenten direkt am Turm einer Windturbine oder mit anderen Worten Windenergieanlage befestigt. Der Transformator 6 ist auf einer entsprechenden Tragstruktur 19 und der Transformator 7 auf einer Tragstruktur 20 angeordnet. Die Tragstrukturen 18, 19, 20 sind daher besonders kostengünstig. Wie bereits ausgeführt wurde, dient die im Meer angeordnete Umrichterstation dazu, die durch den Windpark erzeugte Leistung in die Gleichspannungsverbindung 15 zu übertragen.

Da der Diodengleichrichter 2 zur Leistungsübertragung in lediglich einer Richtung, nämlich von den Transformatoren 6 zum landseitigen Umrichter 16 hin, eingerichtet ist, muss dem Windpark bei Windstille die von ihm benötige Energie auf andere Weise zur Verfügung gestellt werden. Hierzu dienen Energieübertragungsmittel 21, die ein Einkoppelbauteil 22 aufweisen, das hier aus einem Einkoppeltransformator 23 sowie einem mechanischen Schalter 24 besteht. Das Einkoppelbauteil 22 ist über eine Wechselspannungsleitung 25 und der figürlich nicht dargestellten Schaltanlage mit den Strängen 8 des Wechselspannungsnetzes verbunden. Dabei ist das Einkoppelbauteil 22 über den Transformator 25 an das Energieversorgungsnetz 17 angeschlossen. Der Transformator 25 sorgt für die Bereitstellung einer zweckmäßigen Wechselspannung in der Größenordnung zwischen 50 und 70 kV. Auf diese Art und Weise kann der Windpark von Land mit Energie versorgt werden.

Der Aufbau der 6-Pulsbrücke 2 ist in Figur 1a genauer verdeutlicht. Es ist erkennbar, dass die 6-Pulsbrücke 3 drei Phasenmodule 27 aufweist, deren Anzahl der Anzahl der Phasen des Wechselspannungsnetzes 8 entspricht, mit dem der jeweilige Transformator 6, 7 verbunden ist. Jedes Phasenmodul 27 weist zwei entgegengesetzt zueinander polarisierbare Gleichspannungsanschlüsse oder Gleichspannungsklemmen auf, die mit einem Plus- und Minuszeichen gekennzeichnet sind. Darüber hinaus verfügt jedes Phasenmodul 27 über einen Wechselspannungsanschluss 28. Zwischen dem Wechselspannungsanschluss 28 und jedem der Gleichspannungsanschlüsse erstreckt sich jeweils ein Diodenventil 29, so dass jedes Phasenmodul 27 über zwei Diodenventile 29 verfügt. Die Diodenventile 29 umfassen eine Reihenschaltung von Dioden, deren Anzahl jeweils von der vorliegenden Spannung abhängig ist. Gleichspannungsseitig des Diodengleichrichters 2 sind die Glättungsdrosseln 30 schematisch und ohne Kapselungsgehäuse dargestellt.

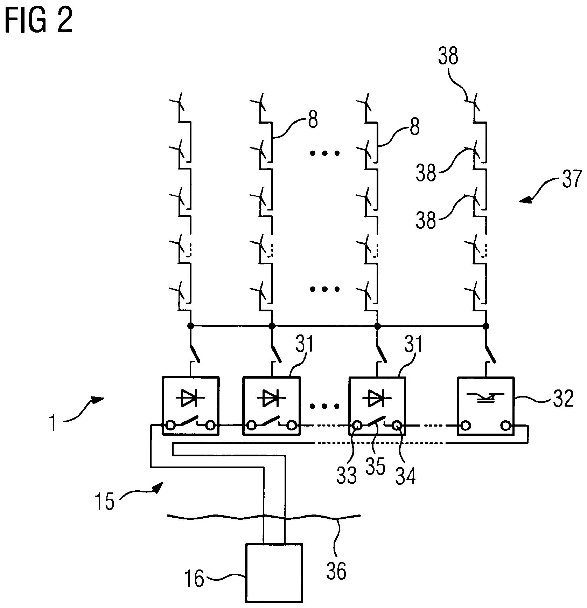

Figur 2 zeigt ein weiteres Ausführungsbeispiel der erfindungsgemäßen Umrichterstation 1, die aus Teilumrichterstationen 31 zusammengesetzt ist, wobei jede Teilumrichterstation 31 neben einem Teildiodengleichrichter einen figürlich nicht dargestellten Teiltransformator sowie eine figürlich ebenfalls nicht dargestellte Teilglättungsdrossel aufweist. Die Teilumrichterstationen 31 sind gleichspannungsseitig miteinander in Reihe geschaltet. Darüber hinaus ist in der besagten Reihenschaltung ein Teilumrichter 32 erkennbar. Jede Teilumrichterstation 31 weist eine erste Gleichspannungsanschlussklemme 33 sowie eine zweite Gleichspannungsanschlussklemme 34 auf, die mittels eines Überbrückungsschalters 35 miteinander verbunden werden können. Mit Hilfe des Überbrückungsschalters 35 ist somit eine Überbrückung beispielsweise einer fehlerhaften Teilumrichterstation 31 ermöglicht.

Die Umrichterstation 1 ist - wie bereits ausgeführt wurde - auf mehreren Tragstrukturen verteilt, etwa 100 km vor einer Küste 36 im Meer angeordnet, wobei ein landseitiger Umrichter 16 über eine Gleichspannungsverbindung 15 mit der Umrichterstation 1 verbunden ist. Es ist erkennbar, dass jede Teilumrichterstation 31 mit einem Strang 8 eines Wechselspannungsnetzes 7 verbunden ist, das zur Verbindung eines Windparks 37 mit der Umrichterstation 1 dient. Der Windpark 37 besteht aus einer Vielzahl von Windenergieanlagen 38.

Auch bei Windstille benötigt der Windpark 37 Energie. Diese wird ihm dann mit Hilfe des Teilumrichters 32 zur Verfügung gestellt. Hierzu werden z.B. alle Teildiodengleichrichter 31 durch Schließen des jeweiligen Überbrückungsschalters 35 überbrückt, so dass der Teilumrichter 32 direkt mit dem landseitigen Umrichter 16 verbunden ist, der beispielsweise ein modularer Mehrstufenumrichter ist. Dieser ist mit einem figürlich nicht dargestellten Energieversorgungsnetz verbunden und speist die notwendige Leistung in den Teilumrichter 32 ein, der diese wechselspannungsseitig für den Windpark 37 bereitstellt.

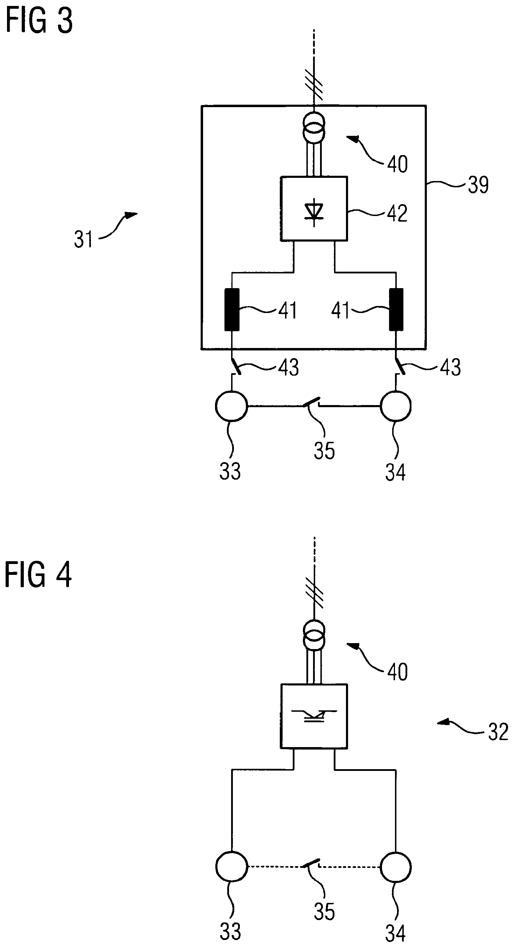

Figur 3 zeigt die Teilumrichterstation 31 genauer. Es ist erkennbar, dass die Teilumrichterstation 31 ein Teilkapselungsgehäuse 39 aufweist, in dem zwei Teilglättungsdrosseln 41, ein Teildiodengleichrichter 42 sowie ein Teiltransformator 40 gemeinsam angeordnet sind. Der Teildiodengleichrichter bildet beispielsweise eine 6-Pulsbrücke aus. Das Teilkapselungsgehäuse 39 ist mit Isolieröl befüllt. Außerhalb des Teilkapselungsgehäuses 39 sind mechanische Gleichspannungsschalter 43 erkennbar, mit denen der jeweilige Pol mit dem Überbrückungsschalter 35 verbindbar ist.

Figur 4 zeigt den Teilumrichter 32 genauer, der in keinem separaten Kapselungsgehäuse angeordnet ist. Der Teilumrichter 32 weist gleichspannungsseitig keine Glättungsdrosseln auf. Diese sind bei einem gesteuerten oder selbstgeführten Teilumrichter unnötig. Auch der Teilumrichter 32 ist mit Hilfe eines Überbrückungsschalters 35 gleichspannungsseitig überbrückbar.

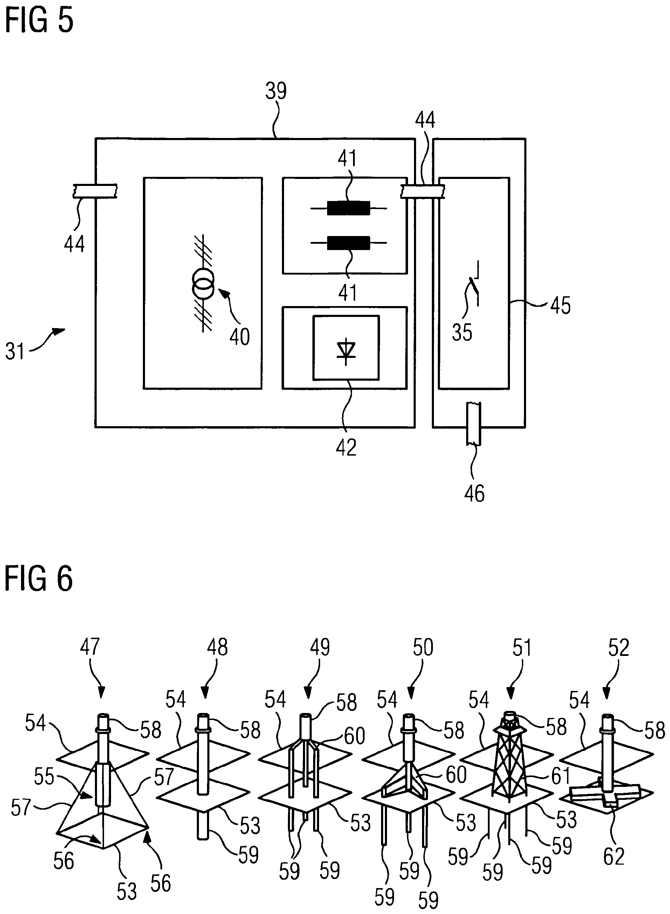

Figur 5 zeigt die Teilumrichterstation 31 in einer schematischen Seitenansicht. Es ist erkennbar, dass Teiltransformator 40, die Teilglättungsdrosseln 41 sowie der Teildiodengleichrichter 42 in einem gemeinsamen Kapselungsgehäuse 39 angeordnet sind, das mit Öl befüllt ist. Weiterhin sind Durchführungen 44 erkennbar, mit denen Hochspannungsleiter von einer Ölisolierung in eine Schutzgasisolierung überführt sind, wobei sie sich durch eine oder mehrere auf Erdpotenzial liegende Wandung des jeweiligen Kapselungsgehäuses erstrecken. Darüber hinaus ist erkennbar, dass der Überbrückungsschalter 35 ebenfalls in einem Kapselungsgehäuse 45 angeordnet ist, das jedoch mit einem Schutzgas, hier Schwefelhexafluorid, befüllt ist. Die Durchführung 46 ermöglicht einen Kabelanschluss an das mit Schutzgas befüllte Gehäuse 45.

Figur 6 zeigt Ausführungsbeispiele von Windenergieanlagen-Tragstrukturen 47 bis 52, die zum Tragen von Teilen der Umrichterstation 1 eingerichtet sind. Dabei ist der Meeresboden mit dem Bezugszeichen 53 und die Wasseroberfläche mit dem Bezugszeichen 54 versehen.

Die Tragstruktur 47 ist eine so genannte schwimmende Tragstruktur, wobei ein frei schwimmender Auftriebskörper 55 durch eine Verankerung 56 und Seile 57 fest am Meeresboden verankert ist. Auf dem schwimmenden Auftriebskörper 55 ist ein Turm oder Haltemast 58 abgestützt, der zum Halten der Windenergieanlage oder mit anderen Worten Windturbine eingerichtet ist. Der Auftriebskörper 55 ist hinsichtlich seiner Auftriebskräfte auf das Eigengewichtes des Turms 58 und das Gewicht einer Windenergieanlage abgestimmt. Die Verankerung 56 am Meeresboden 53 erfolgt beispielsweise durch das Eintreiben von Pfählen in den Meeresboden. Abweichend davon sind frei auf dem Meeresboden aufliegende Ballastkörper vorgesehen, an denen die Seile befestigt sind.

Bei der Tragstruktur 48 wurde lediglich ein Rammpfahl in den Meeresboden 53 eingetrieben, wobei der eingetriebene Rammpfahl von einem Turm oder Turmabschnitt 58 verlängert wird. An dem Turm 58 sind wieder Teile der Umrichterstation 1 befestigbar.

Die Tragstruktur 49 unterscheidet sich von der Tragstruktur 48 dadurch, dass drei Rammpfähle 59 in den Meeresboden eingetrieben sind. Auf den drei Rammpfählen ist oberhalb der Wasseroberfläche 54 ein Raumtragwerk 60 erkennbar, das sich auf allen Rammpfählen gemeinsam abstützt. Der Turm oder Mast 58 ragt von dem Raumtragwerk 60 senkrecht auf.

Die Tragstruktur 50 unterscheidet sich von der Tragstruktur 49 dadurch, dass das Raumtragwerk 60 tetraedisch ausgebildet und unterhalb der Wasseroberfläche 54 angeordnet ist.

Die Tragstruktur 51 weist anstelle eines Raumtragwerks ein sich auf vier Rammpfähle 59 abstützendes Haltegerüst 61 auf, das sich sowohl unterhalb als auch oberhalb der Wasseroberfläche 54 erstreckt. An dem Haltegerüst 61 ist wieder der Turm oder Haltemast 58 der Windenergieanlage abgestützt.

Die Tragstruktur 52 weist einen Abstellfuß 62 auf, der auf dem Meeresboden 53 aufliegt. Von dem Abstellfuß 62 erstreckt sich direkt der Haltemast oder Turm 58.

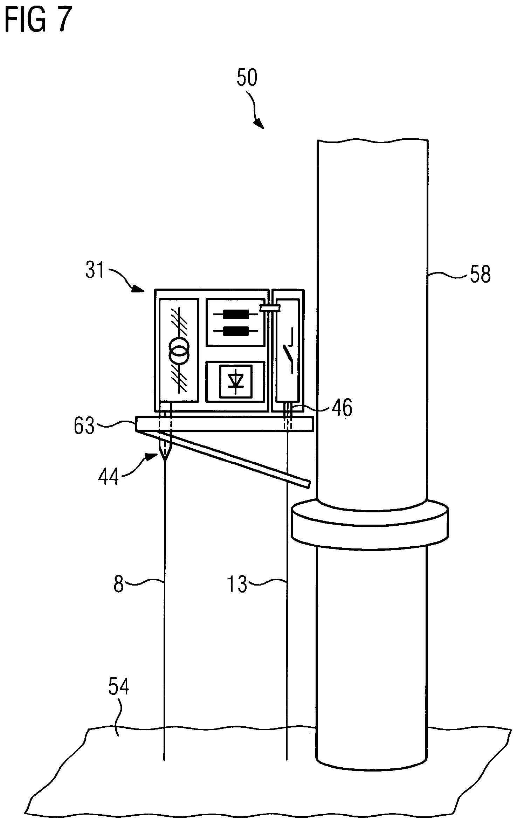

Figur 7 zeigt die Befestigung der Teilumrichterstation 31 gemäß Figur 5 an einem Turm 58 der Windenergieanlagen-Tragstruktur 50 gemäß Figur 6. Es ist erkennbar, dass an dem Turm oder Haltemast 58 eine Trageplattform 63 angebracht ist, auf der die Teilumrichterstation 31 gemäß Figur 5 abgestellt ist. Die hier im Bodenbereich der Teilumrichterstation 31 angeordnete Durchführung 44 ermöglicht den Anschluss eines Wechselspannungskabels, das einem der Stränge 8 des Wechselspannungsnetzes entspricht, das die Umrichterstation 1 mit dem Windpark 37 verbindet. Der Strang 8 ist mit einer Spannung von etwa 65 kV beaufschlagt ist. Ferner ist ein Pol 13 der Gleichspannungsverbindung 5 erkennbar, der auf einem Gleichspannungspotenzial zwischen 200 und 400 kV gegenüber am Erdpotenzial liegt.

## Patentansprüche

1. Umrichterstation (1) zum Übertragen elektrischer Leistung mit einem Umrichter (2), der einen Gleichspannungsanschluss und einen Wechselspannungsanschluss aufweist, und wenigstens einem Transformator (6,7), der mit dem Wechselspannungsanschluss verbundenen ist, wobei der Umrichter (2) über ein Wechselspannungsnetz mit einem Windpark verbunden ist, und die Umrichterstation (1) auf wenigstens zwei unabhängig voneinander aufgestellten Tragstrukturen (18,19,20) verteilt angeordnet ist, wobei der Umrichter (2) mehrere gleichspannungsseitig in Reihe oder parallel geschaltete Teilumrichter (42) aufweist, wobei die Teilumrichter zumindest teilweise von verschiedenen Tragstrukturen (18, 19, 20) gehalten sind, wobei jeder Teilumrichter (42) wechselspannungsseitig mit einem Teiltransformator (40) verbunden ist, **dadurch gekennzeichnet, dass** der besagte Teilumrichter (42) und der besagte Teiltransformator (40) in einem gemeinsamen isolierstoffbefüllten Teilkapselungsgehäuse (39) angeordnet sind und der Isolierstoff gegenüber atmosphärischer Luft verbesserte Isolationseigenschaften aufweist, wobei die Teilumrichter zumindest teilweise Teildiodengleichrichter sind, deren Stromventile eine Reihenschaltung aus Dioden aufweisen.

2. Umrichterstation (1) nach Anspruch 1,
**dadurch gekennzeichnet, dass**
der Umrichter (2) und wenigstens einer der Transformatoren (6,7) von verschiedenen Tragstrukturen (18,19,20) gehalten ist.

3. Umrichterstation (1) nach Anspruch 1 oder 2,
**dadurch gekennzeichnet, dass**
die Tragstrukturen (18,19,20) im Meer oder in einer See anordenbar sind, wobei zumindest eine Tragstruktur (18, 19, 20) eine Windenergieanlagen-Tragstruktur ist, die zum Halten einer Windenergieanlage (38) dimensioniert ist.

4. Umrichterstation (1) nach Anspruch 1,
**dadurch gekennzeichnet, dass**
jeder Teilumrichter (42) zwei Gleichspannungsklemmen (31,32) aufweist, die mittels eines Überbrückungsschalters (35) überbrückbar sind.

5. Umrichterstation (1) nach einem der Ansprüche 1 bis 4,
**dadurch gekennzeichnet, dass**
jeder Teilumrichter (42) eine 6-Pulsbrücke ausbildet.

6. Umrichterstation (1) nach einem der Ansprüche 1 bis 5,
**dadurch gekennzeichnet, dass** jeder Teilumrichter (42) eine 12-Pulsbrücke ausbildet.

7. Umrichterstation (1) nach einem der vorhergehenden Ansprüche,
**dadurch gekennzeichnet, dass**
wechselspannungsseitig des Umrichters (2) eine Filtereinheit vorgesehen ist.

8. Umrichterstation (1) nach einem der Ansprüche 1 bis 5,
**dadurch gekennzeichnet, dass**
jeder Teilumrichter gleichspannungsseitig mit einer Teilglättungsdrossel verbunden ist.

9. Umrichterstation (1) nach einem der Ansprüche 1 bis 3,
**dadurch gekennzeichnet, dass**
der Umrichter ein Diodengleichrichter ist.

10. Umrichterstation (1) nach Anspruch 9,
**dadurch gekennzeichnet, dass**
der Diodengleichrichter gleichspannungsseitig mit einer Glättungsdrossel verbunden ist.

11. Umrichterstation (1) nach einem der vorhergehenden Ansprüche,
**dadurch gekennzeichnet, dass**
Energieversorgungsmittel (21) zur Versorgung eines an die Umrichterstation (1) angeschlossenen Wechselspannungsnetzes (8) mit elektrischer Leistung vorgesehen sind.

12. Umrichterstation (1) nach Anspruch 11,
**dadurch gekennzeichnet, dass**
die Energieversorgungsmittel (21) einen Teilumrichter (32) aufweisen, der Teildiodengleichrichtern (42) gleichspannungsseitig in Reihe geschaltet ist.

13. Umrichterstation (1) nach einem der vorhergehenden Ansprüche,
**dadurch gekennzeichnet, dass**
jeder Transformator (6,7) mit einer Schaltanlage verbunden ist.

14. Umrichterstation (1) nach Anspruch 13,
**dadurch gekennzeichnet, dass**
die Schaltanlage über eine Wechselspannungsleitung (25) mit einem Einkoppelbauteil (22) verbindbar ist, das an ein landseitiges Energieversorgungsnetz (17) oder ein seeseitiges Wechselspannungsnetz angeschlossen ist.

## Claims

1. Converter station (1) for transmitting electrical power, having a converter (2), which has a DC-voltage connection and an AC-voltage connection, and at least one transformer (6, 7), which is connected to the AC-voltage connection, wherein the converter (2) is connected to a wind farm via an AC-voltage grid, and the converter station (1) is arranged in a manner distributed on at least two support structures (18, 19, 20) which are erected independently of one another, wherein the converter (2) has a plurality of partial converters (42) series-connected or parallel-connected on the DC-voltage side, wherein the partial converters are held at least partially on different support structures (18, 19, 20), wherein each partial converter (42) is connected on the AC-voltage side to a partial transformer (40), **characterized in that** said partial converter (42) and said partial transformer (40) are arranged in a common partial encapsulation housing (39) filled with insulating material and the insulating material has improved insulation properties with respect to atmospheric air, wherein the partial converters are at least partially partial diode rectifiers, the current valves of which have a series circuit composed of diodes.

2. Converter station (1) according to Claim 1,
**characterized in that**
the converter (2) and at least one of the transformers (6, 7) are held on different support structures (18, 19, 20).

3. Converter station (1) according to Claim 1 or 2,
**characterized in that**
the support structures (18, 19, 20) can be arranged in the sea or in a lake, wherein at least one support structure (18, 19, 20) is a wind-turbine support structure which is dimensioned to hold a wind turbine (38).

4. Converter station (1) according to Claim 1,
**characterized in that**
each partial converter (42) has two DC-voltage terminals (31, 32) which can be bypassed by means of a bypass switch (35).

5. Converter station (1) according to any of Claims 1 to 4,
**characterized in that**
each partial converter (42) forms a six-pulse bridge.

6. Converter station (1) according to any of Claims 1 to 5,
**characterized in that**
each partial converter (42) forms a twelve-pulse bridge.

7. Converter station (1) according to any of the preceding claims,
**characterized in that**
a filter unit is provided on the AC-voltage side of the converter (2).

8. Converter station (1) according to any of Claims 1 to 5,
**characterized in that**
each partial converter is connected on the DC-voltage side to a partial smoothing inductor.

9. Converter station (1) according to any of Claims 1 to 3,
**characterized in that**
the converter is a diode rectifier.

10. Converter station (1) according to Claim 9,
**characterized in that**
the diode rectifier is connected on the DC-voltage side to a smoothing inductor.

11. Converter station (1) according to any of the preceding claims,
**characterized in that**
power supply means (21) for supplying an AC-voltage grid (8) connected to the converter station (1) with electrical power are provided.

12. Converter station (1) according to Claim 11,
**characterized in that**
the power supply means (21) have a partial converter (32) which is connected in series with the partial diode rectifiers (42) on the DC-voltage side.

13. Converter station (1) according to any of the preceding claims,
**characterized in that**
each transformer (6, 7) is connected to a switchgear assembly.

14. Converter station (1) according to Claim 13,
**characterized in that**
the switchgear assembly is connectable via an AC-voltage line (25) to a coupling-in component (22) which is connected to a power supply grid (17) on land or an AC-voltage grid in the sea.

## Revendications

1. Poste (1) d'onduleur pour le transport de puissance électrique, comprenant un onduleur (2), qui a une borne de tension continue et une borne de tension alternative, et au moins un transformateur (6, 7), qui est connecté à la borne de tension alternative, l'onduleur (2) étant connecté à un parc éolien par un réseau de tension alternative,
et
le poste (1) d'onduleur est réparti sur au moins deux structures (18, 19, 20) porteuses, érigées indépendamment l'une de l'autre, l'onduleur (2) ayant plusieurs onduleurs (42) partiels, montés en série ou en parallèle du côté de la tension continue, les onduleurs partiels étant maintenus, au moins en partie, par des structures (18, 19, 20) porteuses différentes, chaque onduleur (42) partiel étant connecté, du côté de la tension alternative, à un transformateur (40) partiel,
**caractérisé en ce que**
ledit onduleur (42) partiel et ledit transformateur (40) partiel sont disposés dans une enveloppe (39) commune partielle de blindage, remplie d'une substance isolante, et la substance isolante a des propriétés d'isolation améliorées par rapport à l'air atmosphérique,
dans lequel les onduleurs partiels sont, au moins en partie, des redresseurs partiels à diodes, dont les soupapes de courant ont un circuit série composé de diodes.

2. Poste (1) d'onduleur suivant la revendication 1, **caractérisé en ce que**
l'onduleur (2) et au moins l'un des transformateurs (6, 7) est maintenu par des structures (18, 19, 20) porteuses différentes.

3. Poste (1) d'onduleur suivant la revendication 1 ou 2,
**caractérisé en ce que**
les structures (18, 19, 20) porteuses peuvent être mises en mer ou dans un lac, au moins une structure (18, 19, 20) porteuse étant une structure porteuse d'une éolienne, qui est dimensionnée pour maintenir une éolienne (38).

4. Poste (1) d'onduleur suivant la revendication 1,
**caractérisé en ce que**
chaque onduleur (42) partiel a deux bornes (31, 32) de tension continue, qui peuvent être shuntées au moyen d'un interrupteur (35) de shuntage.

5. Poste (1) d'onduleur suivant l'une des revendications 1 à 4,
**caractérisé en ce que**
chaque onduleur (42) partiel est constitué d'un pont à 6 impulsions.

6. Poste (1) d'onduleur suivant l'une des revendications 1 à 5,
**caractérisé en ce que**
chaque onduleur (42) partiel est constitué d'un pont à 12 impulsions.

7. Poste (1) d'onduleur suivant l'une des revendications précédentes,
**caractérisé en ce qu'**
il est prévu une unité de filtrage du côté de la tension alternative de l'onduleur (2).

8. Poste (1) d'onduleur suivant l'une des revendications 1 à 5,
**caractérisé en ce que**
chaque onduleur partiel est connecté à une bobine partielle de lissage du côté de la tension continue.

9. Poste (1) d'onduleur suivant l'une des revendications 1 à 5,
**caractérisé en ce que**
l'onduleur est un redresseur à diode.

10. Poste (1) d'onduleur suivant la revendication 9,
**caractérisé en ce que**
le redresseur à diode est connecté à une bobine de lissage du côté de la tension continue.

11. Poste (1) d'onduleur suivant l'une des revendications précédentes,
**caractérisé en ce qu'**
il est prévu des moyens (21) d'alimentation en énergie pour l'alimentation en puissance électrique d'un réseau (8) de tension alternative raccordé au poste (1) d'onduleur.

12. Poste (1) d'onduleur suivant la revendication 11,
**caractérisé en ce que**
les moyens (21) d'alimentation en énergie ont un onduleur (32) partiel, qui est monté en série du côté de la tension continue, avec les redresseurs (42) partiels à diode.

13. Poste (1) d'onduleur suivant l'une des revendications précédentes,
**caractérisé en ce que**
chaque transformateur (6, 7) est connecté à une installation de coupure.

14. Poste (1) d'onduleur suivant la revendication 13,
**caractérisé en ce que**
l'installation de coupure peut être connectée, par une ligne (25) de tension alternative, à un composant (22) de couplage, qui est raccordé à un réseau (17) d'alimentation en énergie du côté de la terre ferme ou à un réseau de tension alternative du côté de la mer.
